# EUROPÄISCHE PATENTSCHRIFT

(11) **EP 2 703 657 B1**
(45) Veröffentlichungstag und Bekanntmachung des Hinweises auf die Patenterteilung: **15.06.2016**
(21) Anmeldenummer: 13003954.8
(22) Anmeldetag: 08.08.2013
(51) Int. Cl.: F16B 21/07, F16B 37/08

(54) **Befestigungselement mit mehreren Fügerichtungen und entsprechende Befestigungsanordnung für die Befestigung eines Anbauteils an einer Fahrzeugkarosserie**
Fastening element with multiple fitting directions and corresponding fastening element for fixing an attachment to a vehicle body
Elément de fixation doté de plusieurs directions d'assemblage et agencement de fixation correspondant pour la fixation d'une pièce rapportée sur une carrosserie de véhicule

(30) Priorität: 29.08.2012 DE 102012017088
(43) Veröffentlichungstag der Anmeldung: 05.03.2014
(73) Patentinhaber: AUDI AG, 85045 Ingolstadt (DE)
(72) Erfinder: Gensler, Marco, 80807 München (DE); Wölkl, Stefan, 85077 Manching (DE); Nessel, Mark, 85052 Kösching (DE)

(56) Entgegenhaltungen:
- EP-A2- 2 233 755
- DE-A1-102010 004 686
- FR-A1- 2 474 134
- US-A- 2 364 880

## Beschreibung

Die Erfindung betrifft ein Befestigungselement bzw. ein Befestigungsmittel für die Befestigung eines Anbauteils an einer Fahrzeugkarosserie, wozu das Befestigungselement mit einem karosserieseitig angeordneten Befestigungsbolzen oder dergleichen mechanisch verbunden wird und sich mit mehreren Federzungen an diesem Befestigungsbolzen festhalten kann.

Die Erfindung betrifft ferner eine Befestigungsanordnung, die ein solches Befestigungselement und einen Befestigungsbolzen oder dergleichen umfasst.

Ein Befestigungselement und eine Befestigungsanordnung betreffender Art sind aus der DE 10 2010 004686 A1 bekannt. Zum Stand der Technik wird ergänzend auch auf die DE 10 2004 017 449 A1 hingewiesen.

Der Erfindung liegt die Aufgabe zugrunde ein Befestigungselement der eingangs genannten Art anzugeben, dass sich ohne Beeinträchtigung der Haltefunktion verhältnismäßig einfach befestigen bzw. verbinden und wieder lösen lässt.

Diese Aufgabe wird gelöst durch ein erfindungsgemäßes Befestigungselement mit den Merkmalen des Anspruchs 1.

Mit dem nebengeordneten Anspruch erstreckt sich die Lösung der Aufgabe auch auf eine erfindungsgemäße Befestigungsanordnung, die ein erfindungsgemäßes Befestigungselement und einen Befestigungsbolzen, auf dem das erfindungsgemäße Befestigungselement befestigbar oder befestigt ist bzw. mit dem das erfindungsgemäße Befestigungselement, insbesondere kraft- und/oder formschlüssig, verbindbar oder verbunden ist, umfasst.

Bevorzugte Weiterbildungen und Ausgestaltungen ergeben sich analog für beide Erfindungsgegenstände sowohl aus den abhängigen Ansprüchen als auch aus den nachfolgenden Erläuterungen.

Das erfindungsgemäße Befestigungselement bzw. Befestigungsmittel für die Befestigung eines Anbauteils an einer Fahrzeugkarosserie, wozu das erfindungsgemäße Befestigungselement, insbesondere durch Aufstecken oder Aufsetzen, mit einem karosserieseitig angeordneten Befestigungsbolzen mechanisch verbunden wird und sich mit mehreren zum Befestigungselement gehörenden Federzungen, wenigstens jedoch einer Federzunge, an diesem Befestigungsbolzen festhält bzw. festhalten kann, weist einen Grundkörper mit einer Ausnehmung, in der die Federzungen angeordnet sind, zur Aufnahme des Befestigungsbolzens auf, wobei die Ausnehmung (wenigstens) zwei Öffnungsbereiche umfasst, so dass das Befestigungselement in wenigstens zwei verschiedenen Fügerichtungen mit dem Befestigungsbolzen verbindbar ist.

Der Grundkörper bzw. Korpus des erfindungsgemäßen Befestigungselements weist demnach eine Ausnehmung bzw. einen Aufnahmebereich zur Aufnahme eines karosserieseitigen Befestigungsbolzens auf, die bzw. der wenigstens zwei Öffnungsbereiche aufweist. Hierunter ist insbesondere zu verstehen, dass die Ausnehmung zu zwei Körperseiten hin bzw. in wenigstens zwei Raumrichtungen offen ist. Die verschiedenen Öffnungsbereiche der Ausnehmung können ineinander übergehen und einen gemeinsamen Öffnungsbereich ausbilden. Bspw. kann vorgesehen sein, dass die Ausnehmung zur Aufnahme des karosserieseitigen Befestigungsbolzens einen gemeinsamen Öffnungsbereich aufweist, der sich über zwei benachbarte Seitenflächen oder aneinandergrenzende Außenbereiche des Grundkörpers erstreckt, so dass die Ausnehmung zu wenigstens zwei Körperseiten hin bzw. in zwei Raumrichtungen offen ist, wie vorausgehend beschrieben.

Die verschiedenen Öffnungsbereiche ermöglichen ein Befestigen bzw. Verbinden des erfindungsgemäßen Befestigungselements am bzw. mit dem karosserieseitigen Befestigungsbolzen in mehreren translatorischen Bewegungsrichtungen bzw. Fügerichtungen. In vorteilhafter Weise sind dadurch beim Verbinden des erfindungsgemäßen Befestigungselements mit einem karosserieseitigen Befestigungsbolzen und bei der Montage eines Anbauteils mehrere Freiheitsgrade gegeben. Die Trennrichtung zum Lösen des erfindungsgemäßen Befestigungselements vom Befestigungsbolzen kann von der Fügerichtung beim Befestigen bzw. Verbinden abweichen. In vorteilhafter Weise sind auch beim Lösen und Demontieren mehrere Freiheitsgrade gegeben.

Vorzugsweise ist der Grundkörper des erfindungsgemäßen Befestigungselements bis auf die Öffnungsbereiche der Ausnehmung im Wesentlichen geschlossen ausgebildet, wodurch eine hohe Formstabilität und Festigkeit der mit dem Befestigungsbolzen herbeigeführten mechanischen Verbindung gewährleistet wird. Insbesondere ist vorgesehen, dass der Grundkörper bis auf die Öffnungsbereiche der Ausnehmung eine im Wesentlichen geschlossene Mantelwand aufweist. Bezüglich der Fügerichtung kann der Grundkörper bspw. einen unteren Öffnungsbereich und einen seitlichen Öffnungsbereich aufweisen, die vorzugsweise ineinander übergehen und einen gemeinsamen Öffnungsbereich ausbilden können. Bevorzugt ist vorgesehen, dass die Federzungen an einem seitlichen Öffnungsbereich der Ausnehmung aus der Ausnehmung herausragen, wodurch das Verbinden des erfindungsgemäßen Befestigungselements (mit einem Befestigungsbolzen) in einer seitlichen Fügerichtung erleichtert wird.

Ein Befestigungsbolzen weist eine axiale Erstreckung auf. Ein Befestigungsbolzen ist bspw. ein Stehbolzen, der mit einem Bolzenkopf, mit umlaufenden Nuten oder einem Gewinde, insbesondere einem so genannten Grobgewinde, ausgebildet ist. Bevorzugt handelt es sich um einen Schweißbolzen, der ortsfest an der Fahrzeugkarosserie befestigt ist und insbesondere senkrecht von der Befestigungsebene abragt. Der Befestigungsbolzen kann direkt an einem zur Rohkarosse gehörenden Bauteil oder indirekt über ein Anbauteil an der Fahrzeugkarosserie befestigt sein. Die Erfindung kann jedoch auch derart umgesetzt werden, dass das erfindungsgemäße Befestigungselement ortsfest an der Fahrzeugkarosserie befestigt ist und zur Befestigung bzw. Montage eines Anbauteils einen korrespondierenden Befestigungsbolzen, der bspw. direkt an dem zu montierenden Anbauteil angeordnet ist, aufnehmen kann.

Bei dem zu befestigenden Anbauteil handelt es sich insbesondere um ein Innenverkleidungsteil oder ein sonstigstes im Fahrzeuginnenraum zu befestigendes Bauteil. Ein Anbauteil kann mit mehreren erfindungsgemäßen Befestigungselementen bzw. Befestigungsanordnungen an der Fahrzeugkarosserie befestigt werden bzw. befestigt sein.

Bevorzugt ist vorgesehen, dass die baulich vorgegebenen ermöglichten Fügerichtungen des erfindungsgemäßen Befestigungselements im Wesentlichen senkrecht zueinander sind. Eine erste Fügerichtung kann bspw. der axialen Richtung des Befestigungsbolzens entsprechen (axiale Fügerichtung). Eine zweite Fügerichtung kann bspw. einer zur axialen Richtung des Befestigungsbolzens senkrechten Richtung (Normale zur Längsachse des Befestigungsbolzens) entsprechen (seitliche Fügerichtung). Die Ausnehmung im Grundkörper des erfindungsgemäßen Befestigungselements und deren Öffnungsbereiche sind entsprechend ausgebildet.

Bevorzugter Weise sind in der Ausnehmung des erfindungsgemäßen Befestigungselements sich paarweise gegenüberliegende Federzungen angeordnet, die sich mit ihren einander zugewandten, vorderen freie Zungenenden form- und/oder kraftschlüssig an den Befestigungsbolzen anlegen und so das Befestigungselement auf dem Befestigungsbolzen festhalten bzw. fixieren können. Wenigstens ist ein Federzungenpaar vorgesehen. Vorzugsweise sind mehrere Federzungenpaare in der Ausnehmung angeordnet. Insbesondere sind zwischen zwei und vier Federzungenpaare vorgesehen. Ferner ist bevorzugt vorgesehen, dass die Federzungen eines Federzungenpaares in axialer Richtung (des Befestigungsbolzens bzw. der Ausnehmung) zueinander geringfügig versetzt angeordnet sind.

Wenigstens ein Öffnungsbereich der Ausnehmung im Grundkörper und insbesondere ein vorderer bzw. seitlicher Öffnungsrand kann mit einer außenliegenden Fase und/oder Verrundung ausgebildet sein. Eine solche Fase und/oder Verrundung kann als Einführschräge fungieren und beim Verbinden des erfindungsgemäßen Befestigungselements mit dem Befestigungsbolzen ein Verkanten verhindern.

Wie bereits erläutert kann die Ausnehmung im Grundkörper einen seitlichen Öffnungsbereich aufweisen, wobei bevorzugt vorgesehen ist, dass der Grundkörper im Abschnitt dieses seitlichen Öffnungsbereichs durch eine am Grundkörper ausgebildete Verrippung stabilisiert ist. Insbesondere ist vorgesehen, dass diese Verrippung außenliegend am Grundkörper ausgebildet ist und bspw. zwei einzelne Rippen umfasst, die die axialen Längskanten des seitlichen Öffnungsbereichs stabilisieren und so durch Abstützung der Federzungen im seitlichen Öffnungsbereich eine dauerhafte Verbindung zwischen dem erfindungsgemäßen Befestigungselement und einem Befestigungsbolzen gewährleisten.

Bevorzugt ist vorgesehen, dass der Grundkörper im Wesentlichen mit einer einheitlichen Wandstärke ausgebildet ist. Bevorzugt ist auch vorgesehen, dass die Federzungen im Wesentlichen mit einer einheitlichen bzw. konstanten Dicke ausgebildet sind. Besonders bevorzugt ist vorgesehen, dass, zumindest im Mittel, die Wandstärke des Grundkörpers in etwa der doppelten Dicke der Federzungen entspricht.

Die Federzungen können einseitig am Grundkörper angelenkt und im übrigen freistehend ausgebildet sein. Bspw. können die Federzungen im Wesentlichen rechteckförmig ausgebildet sein, wobei diese dann mit einer Längs-Außenkante an einer Innenfläche der Ausnehmung angelenkt sind, so dass die übrigen Außenkanten (d. h. die vorderen freien Zungenenden und die seitlichen Kanten) frei liegen.

Ferner ist bevorzugt vorgesehen, dass die Federzungen geneigt ausgebildet sind. Hierunter ist insbesondere zu verstehen, dass die vorderen freien Zungenenden von einem unteren Öffnungsbereich der Ausnehmung wegweisen.

Das erfindungsgemäß Befestigungselement ist vorzugsweise einstückig aus einem Kunststoffmaterial gebildet. Insbesondere handelt es sich um ein einstückiges Kunststoff-Spritzgussteitl

Die Erfindung wird nachfolgend anhand der Zeichnungen beispielhaft und in nicht einschränkender Weise näher erläutert. Die in den Figuren gezeigten und/oder nachfolgend erläuterten Merkmale können, unabhängig von konkreten Merkmalskombinationen, zugleich allgemeine Merkmale der Erfindung sein.
- Fig. 1: zeigt ein erfindungsgemäßes Befestigungselement in einer perspektivischen Vorderansicht.
- Fig. 2: zeigt das Befestigungselement aus Fig. 1 in einer perspektivischen Rückansicht.
- Fig. 3: zeigt das an einem Befestigungsbolzen befestigte Befestigungselement aus Fig. 1 in einer perspektivischen Vorderansicht.

Die nachfolgend verwendeten Richtungs- und Ortsangaben beziehen sich in nicht einschränkender Weise lediglich auf die in den Figuren gezeigten Darstellungen und können von realen Einbausituationen abweichen.

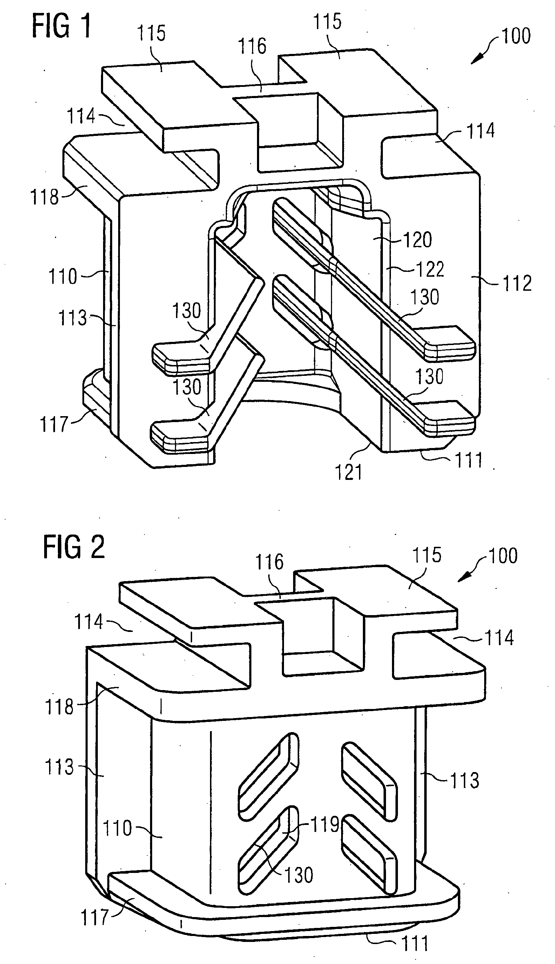

Fig. 1 zeigt ein insgesamt mit 100 bezeichnetes erfindungsgemäßes Befestigungselement. Das Befestigungselement 100 weist einen näherungsweise quaderförmigen Grundkörper bzw. Korpus 110 auf, in dem eine zentrale Ausnehmung 120 ausgebildet ist. Die Ausnehmung 120 weist einen unteren Öffnungsrand 121 und einen vorderen bzw. seitlichen Öffnungsrand 122 auf. Der untere Öffnungsrand 121 umrandet einen unteren Öffnungsbereich an der Unterseite 111 des Grundkörpers 110. Der vordere Öffnungsrand 122 umrandet einen vorderen bzw. seitlichen Öffnungsbereich an der Vorderseite 112 des Grundkörpers 110. Die beiden Öffnungsbereiche gehen ineinander über. Der vordere Öffnungsrand 122 ist mit einer Fase oder einer Verrundung ausgebildet.

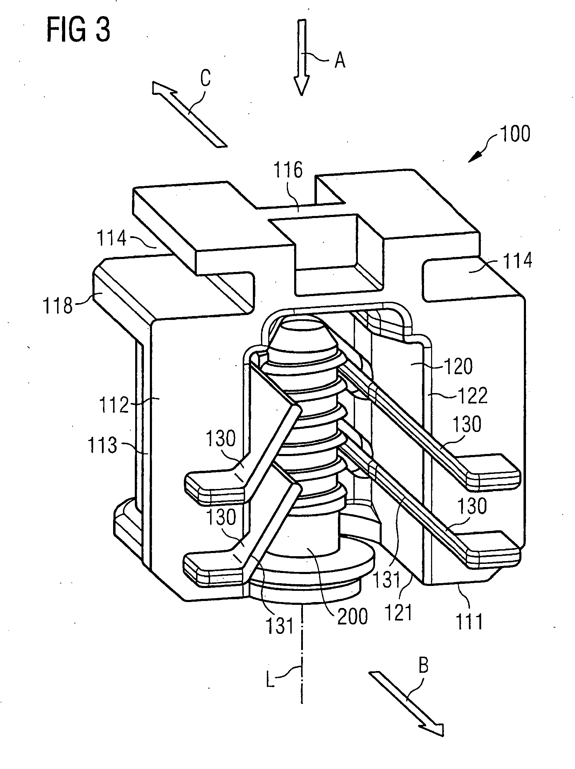

Innerhalb der Ausnehmung 120 sind insgesamt vier Federzungen bzw. Rastzungen oder Laschen 130 angeordnet, die sich paarweise gegenüberliegen. Die Federzungen 130 sind schräg bzw. geneigt, so dass die vorderen freien Zungenenden vom unteren Öffnungsrand 121 bzw. vom unteren Öffnungsbereich wegweisen. Bevorzugt ist vorgesehen, dass die sich gegenüberliegenden Federzungen 130 in axialer Richtung (siehe Fig. 3) leicht versetzt zueinander angeordnet sind. Die Federzungen 130 stehen in seitlicher Richtung über die Vorderseite 112 des Grundkörpers 110 vor und ragen somit über den vorderen Öffnungsrand 122 aus der Ausnehmung 120 heraus. Zur Abstützung der Federzungen 130 und zur Verbesserung der Formstabilität des Grundkörpers 110 ist beidseitig des vorderen Öffnungsrands 122 eine außenliegende Verrippung 113 am Grundkörper 110 vorgesehen. Mit 117 und 118 sind im unteren Bereich und im oberen Bereich den Grundkörper 110 dreiseitig umlaufende Versteifungsrippen bezeichnet. Der zurückgesetzte Wandungsbereich zwischen den Versteifungsrippen 117 und 118 kann als Griffbereich beim Handling des Befestigungselements 100 dienen.

An seiner der Unterseite 111 gegenüberliegenden Oberseite ist der Grundkörper 110 mit einer Doppel-Nut 114 für die formschlüssige Anbindung eines zu befestigenden Verkleidungsteils ausgebildet. Die Doppel-Nut 114 ermöglicht hierbei auch einen bedingten Toleranzausgleich. Die die Doppel-Nut 114 ausbildenden Greifarme 115 sind durch (wenigstens) eine Querrippe 116 gegeneinander abgestützt.

Das Befestigungselement 100 ist einstückig aus einem Kunststoffmaterial gebildet. Bevorzugt handelt es sich um ein Kunststoff-Spritzgussteil. Der Grundkörper 110 weist im Wesentlichen eine gleichmäßige Wandstärke auf, die in etwa dem doppelten der Dicke der Federzungen 130 entsprechen kann.

Fig. 2 zeigt das Befestigungselement 100 von hinten. Mit 119 sind Öffnungen in der der Vorderseite 112 gegenüberliegenden Rückwand des Befestigungselements 100 bezeichnet. Durch die Öffnungen 119 können bei der Herstellung des Befestigungselements 100 in einem Spritzgusswerkzeug Werkzeugdorne hindurchgreifen, um eine Verbindung der Federzungen 130 mit der Rückwand zu verhindern. Somit kann das Befestigungselement 100 kostengünstig in einem konventionell aufgebauten Spritzgusswerkzeug (ohne Schiebertechnologie) mit umlaufend freistehenden Federzungen 130 hergestellt werden. Die in axialer Richtung versetzte Anordnung der Öffnungen 119 entspricht dem axialen Versatz eines sich gegenüberliegenden Federzungenpaars, wie vorausgehend erläutert.

Fig. 3 zeigt das an einem karosserieseitigen Befestigungsbolzen 200 befestigte Befestigungselement 100. Bei dem Befestigungsbolzen 200 handelt es sich beispielhaft um einen so genannten Grobgewindebolzen. Das Befestigungselement 100 übergreift mit seiner Ausnehmung 120 den Grobgewindebolzen 200, wobei sich die Federzungen 130 mit ihren als Rastkanten fungierenden vorderen freien Zungenenden kraft- und/oder formschlüssig an den Grobgewindebolzen 200 anlegen und so eine dauerhafte Verbindung bzw. Befestigung des Befestigungselements 100 mit dem bzw. an dem Befestigungsbolzen 200 bewerkstelligen. Durch die Neigung der Federzungen 130 wird insbesondere in axialer Richtung L des Grobgewindebolzens 200 eine hohe Verbindungsfestigkeit zwischen dem Befestigungselement 100 und dem Befestigungsbolzen 200 erzielt.

Um das Befestigungselement 100 am Befestigungsbolzen 200 zu befestigen bzw. mit dem Befestigungsbolzen 200 zu verbinden muss die Ausnehmung 120 im Befestigungselement 100 mit dem Befestigungsbolzen 200 in Überdeckung bzw. in Eingriff gebracht werden. Dieses In-Eingriff-Bringen kann in verschiedenen Fügerichtungen erfolgen, wie nachfolgend erläutert. Das In-Eingriff-Bringen kann manuell oder maschinell erfolgen.

Eine erste Befestigungs- bzw. Verbindungsmöglichkeit sieht vor, das Befestigungselement 100 mit seinem unteren Öffnungsbereich an der Unterseite 111 oberhalb des Grobgewindebolzens 200 zu positionieren und dann durch axiales Bewegen (entlang der Längsachse L) des Befestigungselements 100 in Richtung auf den Grobgewindebolzen 200 den in Fig. 3 gezeigten Eingriff herbei zu führen. Die axiale Fügerichtung bzw. Montagerichtung bei dieser Befestigungsmöglichkeit ist mit dem Pfeil A veranschaulicht. Das Befestigungselement 100 wird quasi von oben auf den Grobgewindebolzen 200 aufgesteckt und festgedrückt, wobei die Federzungen 130 elastisch verformt werden und sich dann an den Grobgewindebolzen 200 anlegen, wie obenstehend erläutert. Das Einrasten der vorderen freien Zungenenden der Federzungen 130 am Befestigungsbolzen 200 führt zu einer sensitiv und/oder akustisch wahrnehmbaren Rückmeldung, wodurch eine korrekt herbeigeführte Verbindung angezeigt wird. Das Befestigungselement 100 eignet sich somit insbesondere auch für eine verdeckte Befestigung bzw. Montage.

Eine zweite Befestigungsmöglichkeit sieht vor, das Befestigungselement 100 mit seinem seitlichen Öffnungsbereich an der Vorderseite 112 seitlich neben dem Grobgewindebolzen 200 zu positionieren und dann durch seitliches Bewegen (senkrecht zur axialen Richtung L) des Befestigungselements 100 in Richtung auf den Grobgewindebolzen 200 den in Fig. 3 gezeigten Eingriff herbei zu führen. Die seitliche Fügerichtung bzw. Montagerichtung bei dieser Befestigungsmöglichkeit ist mit dem Pfeil B veranschaulicht. Das Befestigungselement 100 wird so zu sagen angelegt und dann auf den Grobgewindebolzen 200 aufgeschoben. Um beim seitlichen Aufschieben des Befestigungselements 100 auf den Grobgewindebolzen 200 ein Verkanten zu verhindern, ragen die Federzungen 130 über die Vorderseite 112 hinaus und können somit elastisch ausgelenkt werden. Ferner können die seitlichen Kanten 131 der Federzungen 130 verrundet ausgebildet sein (wie in Fig. 3 für die rechtsseitig dargestellten Federzungen 130 gezeigt).

Eine weitere Befestigungsmöglichkeit ergibt sich durch eine Kombination der beiden Fügerichtungen A und B, wobei das Befestigungselement 100 quasi schräg von oben auf den Grobgewindebolzen 200 aufgesteckt bzw. aufgesetzt und festgedrückt wird.

Zum beschädigungsfreien Lösen des Befestigungselements 200 kann dieses in seitlicher Richtung vom Befestigungsbolzen 200 heruntergeschoben bzw. abgezogen werden, wobei eine durch die Federzungen 130 bewirkte Haltekraft zu überwinden ist. Gegebenenfalls kann der Eingriff der Federzungen 130 mit einem Werkzeug durch die Öffnungen 119 in der Rückwand hindurch gelöst oder gelockert werden. Die der seitlichen Fügerichtung B entgegengesetzte Löserichtung ist mit dem Pfeil C veranschaulicht.

## Patentansprüche

1. Befestigungselement (100) für die Befestigung eines Anbauteils an einer Fahrzeugkarosserie, wozu das Befestigungselement (100) mit einem karosserieseitig angeordneten Befestigungsbolzen (200) verbunden wird und sich mit mehreren Federzungen (130) an diesem Befestigungsbolzen (200) festhält,
**dadurch gekennzeichnet, dass**
das Befestigungselement (100) einen Grundkörper (110) mit einer Ausnehmung (120), in der die Federzungen (130) angeordnet sind, zur Aufnahme des Befestigungsbolzens (200) aufweist, wobei die Ausnehmung (120) zwei ineinander übergehende Öffnungsbereiche umfasst, nämlich einen unteren Öffnungsbereich (121) und einen seitlichen Öffnungsbereich (122), so dass das Befestigungselement (100) in zwei verschiedenen, zueinander senkrechten Fügerichtungen (A, B) mit dem Befestigungsbolzen (200) verbindbar ist, wobei die erste Fügerichtung (A) der axialen Richtung (L) des Befestigungsbolzens (200) und die zweite Fügerichtung (B) einer zur axialen Richtung (L) des Befestigungsbolzens (200) senkrechten Richtung entspricht.

2. Befestigungselement (100) nach Anspruch 1, **dadurch gekennzeichnet, dass** in der Ausnehmung (120) sich paarweise gegenüberliegende Federzungen (130) angeordnet sind, die sich form- und/oder kraftschlüssig an den Befestigungsbolzen (200) anlegen und so das Befestigungselement (100) auf dem Befestigungsbolzen (200) festhalten können.

3. Befestigungselement (100) nach Anspruch 1 oder 2, **dadurch gekennzeichnet, dass** wenigstens einer der Öffnungsbereiche (121, 122) der Ausnehmung (120) mit einer außenliegenden Fase oder Verrundung ausgebildet ist.

4. Befestigungselement (100) nach einem der vorausgehenden Ansprüche, **dadurch gekennzeichnet, dass** die Ausnehmung (120) einen seitlichen Öffnungsbereich (122) aufweist, der durch eine am Grundkörper (110) ausgebildete Verrippung (113) stabilisiert ist.

5. Befestigungselement (100) nach einem der vorausgehenden Ansprüche, **dadurch gekennzeichnet, dass** die Wandstärke des Grundkörpers (110) in etwa der doppelten Dicke der Federzungen (130) entspricht.

6. Befestigungselement (100) nach einem der vorausgehenden Ansprüche, **dadurch gekennzeichnet, dass** die Federzungen (130) einseitig am Grundkörper (110) angelenkt und im übrigen freistehend ausgebildet sind.

7. Befestigungselement (100) nach einem der vorausgehenden Ansprüche, **dadurch gekennzeichnet, dass** die Federzungen (130) geneigt ausgebildet sind.

8. Befestigungselement (100) nach einem der vorausgehenden Ansprüche, **dadurch gekennzeichnet, dass** dieses einstückig aus einem Kunststoffmaterial gebildet ist.

9. Befestigungsanordnung, umfassend ein Befestigungselement (100) gemäß einem der vorausgehenden Ansprüche und einen Befestigungsbolzen (200) mit dem das Befestigungselement (100) verbindbar ist oder verbunden ist.

## Claims

1. Mounting element (100) for mounting an attachment part on a vehicle body, wherein the mounting element (100) is connected to a mounting bolt (200) arranged on the body side and is attached to said mounting bolt (200) using a plurality of spring tabs (130), **characterised in that** the mounting element (100) comprises a mount body (110) having a recess (120), in which the spring tabs (130) are arranged, for receiving the mounting bolt (200), wherein the recess (120) comprises two merging opening regions, being a lower opening region (121) and a side opening area (122), such that the mounting element (100) can be connected to the mounting bolt (200) in two different mutually perpendicular joining directions (A), (B), wherein the first joining direction (A) is the axial direction (L) of the mounting bolt (200) and the second joining direction (B) is a direction perpendicular to the axial direction (L) of the mounting bolt (200).

2. Mounting element (100) according to claim 1, **characterised in that** oppositely located spring tabs (130) are arranged in pairs in the recess (120) and latch in a form-fitting or force-fitting manner onto the mounting bolts (200) and thus the mounting element (100) can be fastened on the mounting bolt (200).

3. Mounting element (100) according to claim 1 or 2, **characterised in that** at least one of the opening regions (121, 122) of the recess (120) is formed with an external chamfer or rounding.

4. Mounting element (100) according to any of the preceding claims, **characterised in that** the recess (120) has a side opening region (122) which is stabilised through a ribbing (113) formed on the mount body (110).

5. Mounting element (100) according to any of the preceding claims, **characterised in that** the wall thickness of the mount body (110) is approximately twice the thickness of the spring tabs (130).

6. Mounting element (100) according to any of the preceding claims, **characterised in that** the spring tabs (130) are hinged on one side to the mount body (110) and otherwise formed free-standing.

7. Mounting element (100) according to any of the preceding claims, **characterised in that** the spring tabs (130) are formed tilted.

8. Mounting element (100) according to any of the preceding claims, **characterised in that** it is moulded as a single piece from a plastic material.

9. Mounting arrangement comprising a mounting element (100) according to any of the preceding claims and a mounting bolt (200) connectable or connected to the mounting element (100).

## Revendications

1. Élément de fixation (100) pour la fixation d'une pièce à ajouter sur une carrosserie de véhicule, l'élément de fixation (100) étant assemblé à cet effet à un boulon de fixation (200) agencé côté carrosserie et se maintenant sur ce boulon de fixation (200) avec plusieurs languettes formant ressorts (130),
**caractérisé en ce que** l'élément de fixation (100) comporte un corps de base (110) avec un évidement (120), dans lequel les languettes formants ressorts (130) sont agencées, pour la réception du boulon de fixation (200), l'évidement (120) comprenant deux zones d'ouverture qui se rejoignent, à savoir une zone d'ouverture inférieure (121) et une zone d'ouverture latérale (122), de telle sorte que l'élément de fixation (100) peut être assemblé au boulon de fixation (200) dans deux directions d'assemblage (A, B) différentes, perpendiculaires l'une à l'autre, la première direction d'assemblage (A) correspondant à la direction axiale (L) du boulon de fixation (200) et la deuxième direction d'assemblage (B) correspondant à une direction perpendiculaire à la direction axiale (L) du boulon de fixation (200).

2. Élément de fixation (100) selon la revendication 1, **caractérisé en ce que** des languettes formants ressorts (130) qui se font face par paire sont agencées dans l'évidement (120), languettes formant ressorts qui s'appuient par concordance de forme et/ou par adhérence au boulon de fixation (200) et qui peuvent ainsi maintenir l'élément de fixation (100) sur le boulon de fixation (200).

3. Élément de fixation (100) selon la revendication 1 ou 2, **caractérisé en ce qu'**au moins une des zones d'ouverture (121, 122) de l'évidement (120) est conçue avec un chanfrein ou un arrondi à l'extérieur.

4. Élément de fixation (100) selon l'une des revendications précédentes, **caractérisé en ce que** l'évidement (120) comporte une zone d'ouverture latérale (122) qui est stabilisée par des nervures (113) conçues sur le corps de base (110).

5. Élément de fixation (100) selon l'une des revendications précédentes, **caractérisé en ce que** l'épaisseur de paroi du corps de base (110) correspond sensiblement au double de l'épaisseur des languettes formant ressorts (130).

6. Élément de fixation (100) selon l'une des revendications précédentes, **caractérisé en ce que** les languettes formant ressorts (130) sont articulées d'un côté sur le corps de base (110) et sont conçues dégagées pour le reste.

7. Élément de fixation (100) selon l'une des revendications précédentes, **caractérisé en ce que** les languettes formant ressorts (130) sont conçues inclinées.

8. Élément de fixation (100) selon l'une des revendications précédentes, **caractérisé en ce qu'**il est formé d'un seul tenant à partir d'une matière plastique.

9. Dispositif de fixation, comprenant un élément de fixation (100) selon l'une des revendications précédentes et un boulon de fixation (200) auquel l'élément de fixation (100) peut être assemblé ou est assemblé.
